# EUROPEAN PATENT APPLICATION

(11) **EP 1 974 820 A1**
(43) Date of publication of application: **01.10.2008**
(21) Application number: 08003407.7
(22) Date of filing: 25.02.2008
(51) Int. Cl.: B02C 4/28

(54) **Roll mill**

(30) Priority: 26.03.2007 JP 2007078292
(71) Applicant: INOUE MFG., INC., Isehara-shi, Kanagawa-ken (JP)
(72) Inventor: Inoue, Yoshitaka, Isehara-shi Kanagawa-ken (JP); Koreishi, Yoshiki, Isehara-shi Kanagawa-ken (JP); Sano, Masahiro, Isehara-shi Kanagawa-ken (JP)
(74) Representative: Klingseisen, Franz

(57) **Abstract**

A main body (1) of the roll mill is provided with an intermediate roll (3) and a rear roll (4) disposed adjoining one another in front and behind, and the gap between the end portions thereof is closed with an end plate (5). A support bracket (7) movably retains the end plate (5) so that a lower end face (6) of the eridplate can slightly transfer in a direction of peripheries of the rolls (34). The support bracket has a front pressing device (25) which always presses a front portion of the end plate (5) and a rear pressing device (26) which always presses a rear portion of the end plate (5) . When a gap is formed between the periphery of the roll and the lower end face (6) of the end plate (5), the end plate (5) slightly slants and this gap is automatically closed, since the end plate is pressed by the pressing devices.

## Description

### Background of Invention

### Technical Field to which the Invention Belongs

The present invention relates to a roll mill used for a milling or dispersing treatment of materials to be treated in production steps of various products such as printing ink, paints, ceramics, medicines, foods and electronic part materials.

### Prior Art

A conventional roll mills have been widely used in which plural rolls with different revolving speeds are disposed adjoining one another and a milling treatment or a dispersing treatment is carried out by finely grinding a material to be treated with a compression action or a shearing action generated between respective rolls. For example, in a three roll mill, three rolls of a front roll, an intermediate (center) roll and a rear (supply) roll are disposed adjoining one another in front and behind, and the revolving speed is increased in the order of the rear roll, intermediate roll and front roll. Additionally, in order to prevent leakage of the material to be treated through the gap between end portions of the rear roll and intermediate roll, the gap between the end portions of the rear roll and intermediate roll is closed with end plates and the material to be treated is supplied to the space between the rear roll and intermediate roll. When the material to be treated passes through between the rolls, it is crushed by two rolls (compression), introduced with different speed ratio (shearing) and finely ground. At the lower end face of the end plate, curved faces are formed in front and rear parts thereof corresponding to peripheries of two rolls respectively so that the curved faces will be in contact with the peripheries. Since each curved face is in slidably contact with each of the rear roll and intermediate roll, friction between them will cause abrasion. When the revolving speeds of two rolls are the same, the abrasion amounts of the front and rear curved faces of the end plates are at the same level. However, since the respective rolls of the three roll mill are different in the revolving speeds, the abrasion amounts will differ between the front and rear curved faces, and the curved face at the side being in contact with the roll of a high revolving speed side is usually abraded in a larger amount. As a result, a small gap is formed between the roll of the high revolving speed side and the lower end face of end plate, whereby leakage of materials is caused or non-dispersed materials pass through this gap and flow out, leading to deterioration of product quality. Particularly, when the material to be treated is an abrasive material, abrasion is often accelerated, which needs re-processing of the end plate by a rubbing treatment, whereby it has been necessary to often stop the machine and replace the end plates with new ones or to conduct maintenance.

JP-B-58-52819 discloses an apparatus in which when a gap is formed between the roll and the lower end face of end plate, this gap is adjusted by rotating the end plate. However, the apparatus described in this publication has a complicated structure and adjustment is made with two adjustment bolts when the gap is formed, whereby its operation is cumbersome. Further, US Patent No. 2, 513, 541 discloses an apparatus in which two end plates are disposed relative to each roll, and each end plate is pressed against the roll with a spring. However, in this apparatus, since it is required to cover a gap between two end plates with a bridge plate, materials will be retained at the bridge plate part and adversely affect the product. In addition, since these end plates are attached to a bracket fixed to a roll main body, it is difficult to clean the end plate.

### Summary of the Invention

It is an object of the present invention to provide a roll mill with a simple structure in which the gap between an end plate and a roll can be readily adjusted and the press force pressing the end plate against the roll can be adjusted, and cleaning, etc. can be made readily.

The present invention provides a roll mill which comprises a roll mill main body; plural rolls with different revolving speeds rotatably disposed adjoining each other in front and behind, rolls being disposed on the roll mill main body; and an end plate which has curved lower end faces corresponding to peripheries of the rolls and closes a gap between end portions of the rolls, in which a material to be treated is supplied between the rolls to conduct a milling or dispersing treatment, characterized in that a support bracket is disposed on the roll mill main body which movably retains the end plate so that the lower end faces of the end plate may be moved in a direction of the peripheries of the rolls, and the support bracket is provided with a front pressing device which always presses a front upper end of the end plate and a rear pressing device which always presses a rear upper end of the end plate.

The present invention further provides a roll mill wherein in the above roll mill structure, each of the front pressing device and the rear pressing device comprises a vertically movable slide shaft facing an upper end of the end plate, a spring which presses the slide shaft against the upper end of the end plate, and an adjustment screw which adjusts a spring pressure of the spring, by which the above problems can be solved.

By this construction, the support bracket movably retains the end plate so that the lower end faces of the end plate may be moved in the direction of the peripheries of the rolls, and the support bracket is provided with the front pressing device which always presses the front upper end of the end plate and the rear pressing device which always presses the rear upper end of the end plate, whereby the end plate is always pressed by the front pressing device and the rear pressing device in such a direction that the lower end faces of the end plates are always in contact with the peripheries of the rolls, and when a gap is formed at the periphery of the rolls, the end plate moves in such a direction that it closes the gap by the front or rear pressing device (the end plate inclines toward a front lower end gap or a rear lower end gap). Accordingly, there is no possibility of leakage of materials through a gap formed between the end plate and the peripheries of rolls as has been conventionally seen. Further, since the pressing forces of these pressing devices can be adjusted by changing the spring pressure with the adjustment screw, the pressing force can be changed corresponding to each roll, and if the end plate is strongly pressed towards the side at which abrasion tends to proceed largely due to the difference of the revolving speeds of the rolls, it is possible to securely prevent the formation of gap between the roll and the end plate.

Moreover, since the front pressing device and the rear pressing device are each attached to a hanger movably and pivotally mounted on the support bracket, an upper portion of the end plate can be released by rotation of the hanger, whereby attachment, detachment, etc. of the end plate can readily be made. Further, since the support bracket is constituted by an attaching bracket and a reversing bracket rotatably attached to the attaching bracket, the end plate and the reversing bracket can readily be reversed by providing a latching member retaining the end plate with a reversing lever and operating this reversing lever, whereby cleaning after operation can be made easily

### Brief Explanation of Drawings

Fig.1 is a front view showing an example of the present invention, mainly showing an end plate portion.
Fig.2 is a side view of the end plate portion.
Fig.3 is a side view of a support bracket.
Fig.4 is a plane view of the support bracket.
Fig.5 is an exploded plane view of the support bracket.
Fig.6 is an explanatory view showing the state that the end plate is attached to the support bracket.

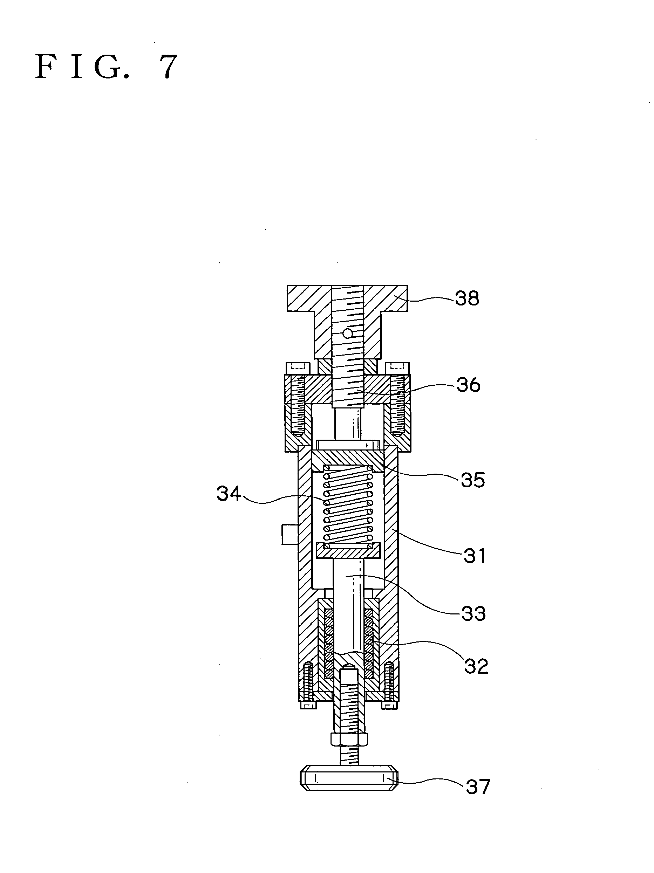

Fig.7 is a cross-sectional view of a pressing device.
Fig.8 is an explanatory view showing the state that the hanger is reversed.
Fig.9 is an explanatory view showing the state that the end plate is reversed.

### Preferred Embodiments of the Invention

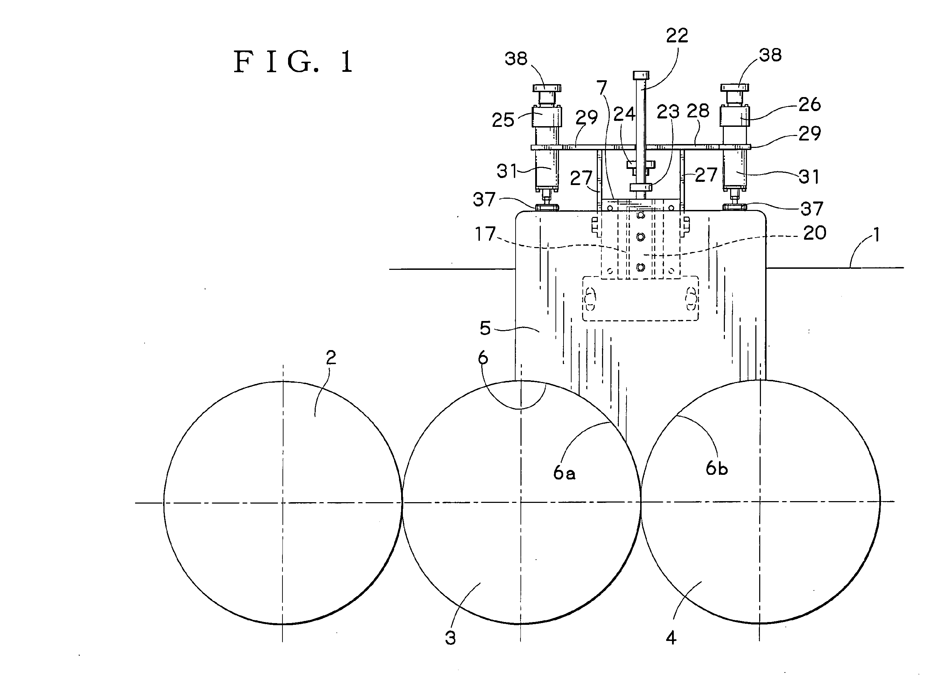

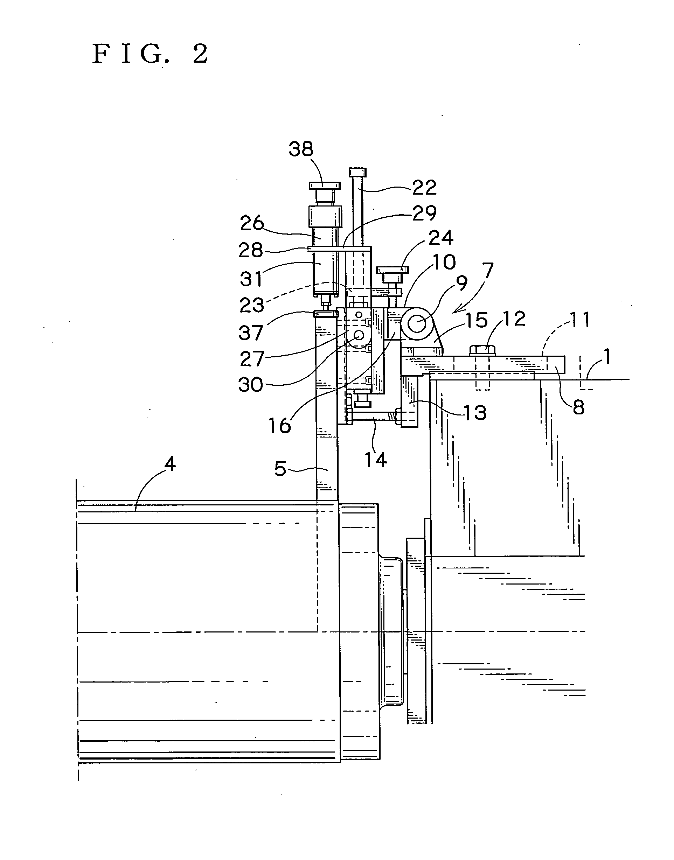

The present invention may be applied to various types of roll mills used for a milling or dispersing treatment of materials to be treated by use of plural rolls having different revolving speeds. The example shown in the figures shows a three roll mill having three rolls disposed adjoining one another in front and behind. With reference to Figs.1 and 2, a front roll (2), an intermediate (center) roll (3) and a rear (supply) roll (4) are disposed adjoining one another in front and behind on a roll mill main body (1), and the revolving speed of roll is sequentially increased from the rear roll (4) towards the front roll (2).

Between end portions of the rear roll (4) and the intermediate roll (3), an end plate (5) is disposed so as to close the gap between the rolls. At the lower end of the end plate (5), a lower end face (6) having curved faces (6a) and (6b) which curve corresponding to the peripheries of the rear roll (4) and intermediate roll (3) in front and behind is formed; and the end plate (5) is, as mentioned below, movably retained by a support bracket (7) so that the lower end face (6) moves in the direction of the peripheries of rolls (the end plate inclines toward the intermediate roll (3) or the rear roll (4)) so as to adjust the gap from the peripheries of rolls. The movement between the lower end face 6 and the peripheries of rolls may be only a little, for example, at most about 2 mm, preferably at most about 0.5 mm.

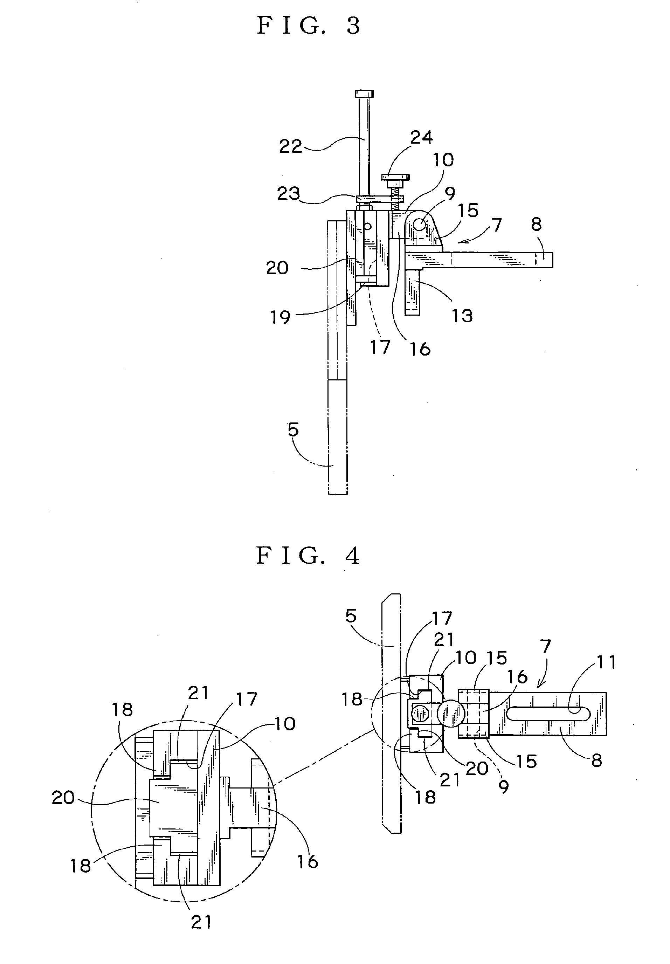

The support bracket (7) retains an upper central portion of the end plate (5) as mentioned below. The support bracket (7) has an attaching bracket (8) attached to the roll mill main body (1) and a reversing bracket (10) pivotally mounted on the attaching bracket (8) by a pivot (9), shown in Fig.2. A slot (11) (Fig.4) extending in an axial direction of the roll is formed in the attaching bracket (8) , so as to adjust attachment position when the attaching bracket (8) is fixed to the roll mill main body (1) with a securing bolt (12). At the lower portion of the front end of the attaching bracket, a downwardly extending plate (13) is formed, and the downwardly extending plate (13) is provided with a stopper (14) to control a rising position of the end plate (5). Further, at the upper portion of the front end of the attaching bracket,a pair of rising members (15) are formed facing apart from each other.

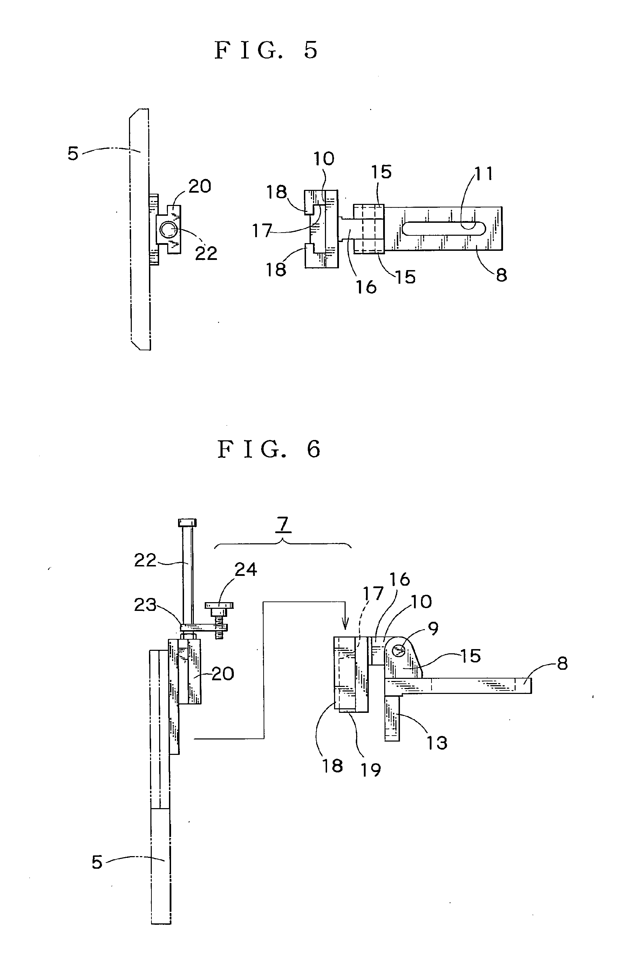

With reference to Figs.5 and 6, the reversing bracket (10) has a base member (16) of which one end is inserted between the rising members (15) of the attaching bracket (8) and pivotally mounted thereon, and a receiving groove (17) formed at another end of the base member (16), which extends vertically and is in substantially C-shaped as seen in the plane view. At an inlet of the receiving groove (17), engagement edges (18) facing each other are formed, while a bottom plate (19) is disposed at a bottom portion of the receiving groove (17).

Further, the support bracket (7) has a latching member (20) which may be inserted into the receiving groove (17) of the reversing bracket (10) and is in substantially T-shaped as seen in the plane view, and the end plate (5) is fixed to this latching member (20) with a bolt. The latching member (20) is loosely engaged with the receiving groove (17) so that in such a state that this latching member (20) is inserted into the receiving groove (17) of the reversing bracket (10), a slight clearance (play) (21) will be formed between the periphery of the latching member (20) and the inner face of the receiving groove within which the latching member can transfer in at least back and forth direction (a direction in which the latching member reaches close to or departs from the periphery of the intermediate roll or the periphery of the rear roll). A reversing lever (22) is attached to an upper central portion of the latching member (20), a supporting member (23) extending horizontally is disposed on a basal portion of the reversing lever (22), a bolt for lifting (24) is screwed into an end portion of the supporting member (23), and a lower end of the bolt for lifting abuts on an upper face of the base member (16) of the reversing bracket (10). By this construction, in such a state that the latching member is engaged with the receiving groove, the end plate (5) hangs down from the bolt for lifting (24), and it is possible to slant, namely, swing , the lower end face of the end plate around the lower end of the bolt in the direction of the peripheries of rolls within a slight range, for example, at most 2 mm as mentioned above. Further, the vertical position of the end plate can readily be adjusted by changing the screwed amount of the bolt for lifting.

On the reversing bracket (10) of the support bracket (7), a front pressing device (25) which always presses the front upper end of the end plate (5) and a rear pressing device (26) which always presses the rear upper end of the end plate (5) are disposed. In the example shown in Fig.1, a hanger (28) having a rising portion (27) is formed; the rising portion (27) is attached to a side face of the reversing bracket (10); and a horizontal portion (29) of the hanger (28), which extends back and forth along the upper end of the end plate (5), is provided with the front pressing device (25) and the rear pressing device (26). Preferably, in this construction, in the hanger (28), a basal portion of the rising portion (27) is pivotally mounted (30) on the reversing bracket (10), by which the hanger can be raised or reversed. If desired, the hanger may be fixedly attached to the support bracket.

As the front pressing device (25) and the rear pressing device (26), any devices may properly be used as far as they can always press the upper end of the end plate (5). In the example shown in the figures, the front pressing device and the rear pressing device are constituted in the same structure. Namely, the pressing device has a pressing device main body (31); and within this pressing device main body (31), a slide shaft (33) which is guided by a linear bush (32) and disposed in a vertically movable fashion facing the upper end of the end plate, and a spring (34) which presses the slide shaft (33) in such a direction against the upper end of the end plate; and an adjusting screw (36) inserted into the pressing device main body (31), which adjusts the spring pressure by vertically moving a receiving plate (35) which abuts on the upper end of the spring (34). By this construction, the front pressing device always presses downwardly the front end of the end plate and the rear pressing device always presses downwardly the rear end of the end plate, by action of the spring via the slide shaft (33). At the lower end of the slide shaft (33), an abutment plate (37) that abuts on the end plate (5) is screw-attached to protect the end plate (5). Further, the adjusting screw (36) is provided with a knob (38) to readily rotate the adjusting screw. Here, in the example shown in the figures, a helical compression spring is used as the spring (34), but other urging means may be used. Further, the structures of the front pressing device and the rear pressing device may be different.

By this construction, as shown in Fig.1, the front curved face (6a) and rear curved face (6b) at the lower end face (6) of the end plate (5), disposed between end portions of the intermediate roll (3) and the rear roll (4), are in uniformly contact with the peripheries of the intermediate roll (3) and the rear roll (4) at the beginning, and no gap is formed between the lower end face (6) and the peripheries of the rolls. And, after operation starts, since the revolving speed of the intermediate roll (3) is faster than that of the rear roll (4), the front curved face (6a) at such side that is in contact with the intermediate roll (3) tends to be abraded in a larger amount than the rear curved face (6b) at such side that is in contact with the rear roll (4). Accordingly, there is a possibility that a gap will be formed between the curved face (6a) facing the intermediate roll (3) and the periphery of the intermediate roll (3). However, as mentioned above, the end plate (5) is movable in such a manner that its lower end face can move in the direction of the peripheries of rolls, and further, the end plate (5) is always pressed downwardly by the front pressing device (25), whereby it is possible to prevent formation of a gap in such a manner that when a gap is formed on the lower end face at the intermediate roll side, the end plate inclines in such a direction to close this gap. Further, by making the spring pressure of the spring of the front pressing device (25) stronger than the other by adjusting the spring (36), it is possible to securely transfer the end plate in such a direction that the end plate can close the gap at the intermediate roll (3) side.

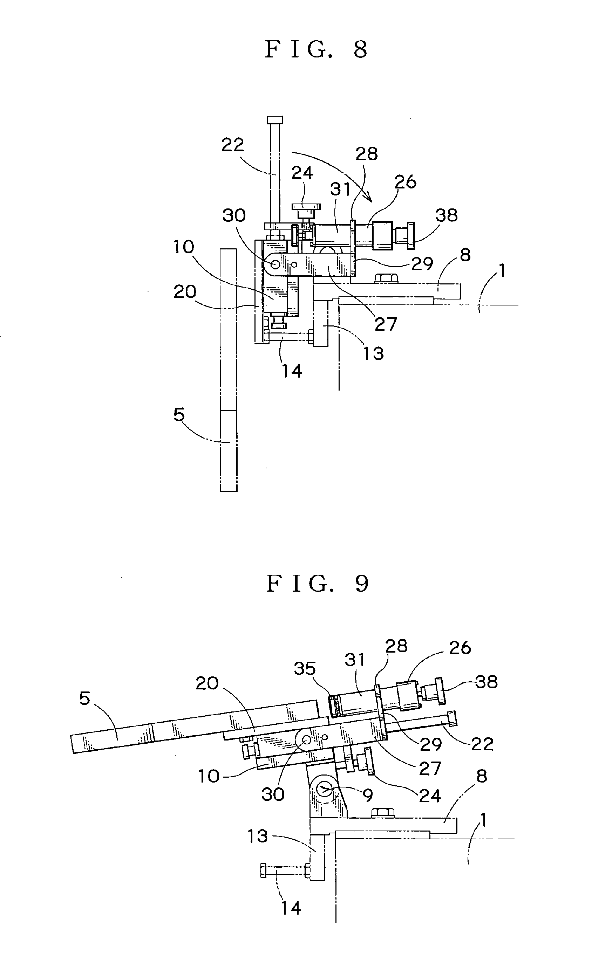

When the end plate 5 is attached/detached, the attachment/detachment operation can readily be made in such a state that the hanger (28) is reversed as shown in Fig.8. Further, cleaning operation can readily be made in such a state that the entire body of the reversing bracket (10) including the end plate (5) is raised upward by use of the reversing lever (Fig.9).

## Claims

1. A roll mill which comprises a roll mill main body; plural rolls with different revolving speeds rotatably disposed adjoining each other in front and behind, said rolls being disposed on the roll mill main body; and an end plate which has curved lower end faces corresponding to peripheries of the rolls and closes a gap between end portions of the rolls, in which a material to be treated is supplied between the rolls to conduct a milling or dispersing treatment,
**characterised in that**
a support bracket (7) is disposed on the roll mill main body (1) which movably retains the end plate (5) so that the lower end faces (6) of the end plate (5) may be moved in a direction of the peripheries of the rolls, and the support bracket (7) is provided with a front pressing device (25) which always presses a front upper end of the end plate (5) and a rear pressing device (26) which always presses a rear upper end of the end plate (5).

2. The roll mill according to Claim 1, wherein the support bracket (7) has a vertically extending receiving groove (17) and a latching member (20) which engages with the receiving groove (17) to attach the end plate (5), and the engagement of the receiving groove (17) with the latching member is loose so as to allow the movement of the end plate in such engaged state.

3. The roll mill according to Claim 1, wherein each of the front pressing device (25) and the rear pressing device (26) comprises a vertically movable slide shaft (33) facing an upper end of the end plate (5) a spring (34) which presses the slide shaft against the upper end of the end plate (5), and an adjustment screw (36) which adjusts a spring pressure of the spring (34).

4. The roll mill according to Claim 1, wherein the support bracket (7) has a hanger (28) having a horizontal portion (29) extending along an upper end of the end plate (5) and a rising portion (27) pivotally mounted on the support bracket (7) ; and front and rear portions of the horizontal portion (29) of the hanger (28) are provided with the front pressing device (25) and the rear pressing device (26), respectively.

5. The roll mill according to Claim 2, wherein the latching member (20) has a bolt (24) for lifting, and the end plate (5) hangs down from the support bracket (7) by the bolt (24) for lifting via the latching member in such a fashion that the end plate can swing.

6. The roll mill according to Claim 2, wherein the latching member (20) has a reversing lever (22).

7. The roll mill according to Claim 1, wherein the support bracket (7) has an attaching bracket (8) which is attached to the roll mill main body (1) and a reversing bracket (10) which is rotatably connected to the attaching bracket (8).
